# FASCICULE DE BREVET EUROPEEN

(11) **EP 3 299 694 B1**
(45) Date de publication et mention de la délivrance du brevet: **05.06.2019**
(21) Numéro de dépôt: 17183305.6
(22) Date de dépôt: 26.07.2017
(51) Int. Cl.: F17C 13/04

(54) **ROBINET POUR FLUIDE SOUS PRESSION ET BOUTEILLE COMPRENANT UN TEL ROBINET**
HAHN FÜR FLÜSSIGKEITEN UNTER DRUCK, UND FLASCHE, DIE EINEN SOLCHEN HAHN UMFASST
VALVE FOR A PRESSURISED FLUID, AND CYLINDER COMPRISING SUCH A VALVE

(30) Priorité: 26.09.2016 FR 1659019
(43) Date de publication de la demande: 28.03.2018
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: Frenal, Antoine, 95460 Ezanville (FR); Bacot, Patrick, 92190 Meudon (FR); Fischer, Benjamin, 94260 Fresnes (FR)
(74) Mandataire: De Cuenca, Emmanuel Jaime

(56) Documents cités:
- FR-A1- 3 033 388
- GB-A- 2 506 447
- US-A1- 2014 151 589
- US-A1- 2016 245 426

## Description

L'invention concerne un robinet pour fluide sous pression ainsi qu'un réservoir comprenant un tel robinet.

L'invention concerne plus particulièrement un robinet pour fluide sous pression, avec ou sans détendeur de pression intégré, comprenant un corps abritant un circuit de fluide ayant une extrémité amont destinée à être mise en relation avec une réserve de fluide sous pression et une extrémité aval destinée à être mise en relation avec un appareil récepteur, le circuit comprenant un organe de contrôle du débit dans le circuit, l'organe de contrôle du débit étant commandé par un organe d'actionnement mobile par rapport au corps du robinet, l'organe d'actionnement étant monté mobile sur le corps du robinet entre une position de repos dans laquelle l'organe de contrôle est disposé dans un premier état correspondant à une première valeur de débit dans le circuit et une seconde position active dans laquelle l'organe d'actionnement déplace l'organe de contrôle dans un second état correspondant à une seconde valeur de débit dans le circuit, le robinet comprenant au moins un organe fonctionnel électronique et un interrupteur de commande du au moins un organe fonctionnel électronique, l'interrupteur étant magnétique et déplaçable dans au moins deux états distincts. Un tel robinet est connu de GB2506447A.

Pour améliorer les fonctionnalités d'un robinet pour bouteille(s) de fluide sous pression il est connu de prévoir des organes électronique de mesure et/ou de communication sans fil.

Cf. par exemple le document FR2868160A1 qui décrit un système modulaire intégrant un capteur électronique pour mesurer l'autonomie d'un réservoir de gaz sous pression.

L'adaptation des fonctionnalités électroniques de tels robinets nécessite de prévoir des éléments mécaniques et électroniques qui satisfont aux exigences de fiabilité, de sécurité et de bon fonctionnement. Les liaisons électriques et mécaniques entre différents organes électroniques doivent particulièrement répondre à ces contraintes.

De plus, une contrainte importante de ces dispositifs est leur consommation électrique qui conditionne leur autonomie.

Un but de la présente invention est de pallier tout ou partie des inconvénients de l'art antérieur relevés ci-dessus.

A cette fin, le robinet selon l'invention, par ailleurs conforme à la définition générique qu'en donne le préambule ci-dessus, est divulgué par la revendication 1.

Par « interrupteur » on désigne un organe coopérant avec un circuit électrique ou électronique présentant au moins deux états distincts (par exemple activé ou non activé) pouvant être traité par un contrôleur pour activer ou non certaines fonctions. Par exemple l'interrupteur peut être tout type de commutateur.

Par ailleurs, des modes de réalisation de l'invention peuvent comporter l'une ou plusieurs des caractéristiques suivantes :
- l'organe d'actionnement déplace ou commute l'interrupteur également par actionnement mécanique et/ou électrique et/ou pneumatique et/ou hydraulique,
- l'organe de contrôle comprend au moins l'un parmi ; un clapet d'isolation, une vanne de régulateur de débit ou de pression, un organe pousse-clapet mobile destiné à actionner un clapet d'un autre appareil lequel le robinet est destiné à être raccordé,
- le au moins un organe fonctionnel électronique comprend au moins l'un parmi : un dispositif réception et/ou d'émission de données sans fil comprenant une antenne, un capteur de pression et/ou de température, une logique électronique de stockage et de traitement de données comprenant un microprocesseur, un écran digital, une source lumineuse,
- l'interrupteur est déplaçable entre deux états distincts respectivement ouvert et fermé correspondant respectivement à une ouverture ou une fermeture d'un circuit électrique comprenant le au mois organe fonctionnel électronique,
- les deux états ouvert et fermé de l'interrupteur commandent respectivement l'interruption de l'alimentation électrique et l'alimentation électrique du au moins organe fonctionnel électronique,
- le au moins un organe fonctionnel électronique est disposé dans un boitier monté de façon amovible sur le corps du robinet,
- le robinet comprend une extrémité de montage comprenant des organes d'accrochage destinés à coopérer avec des organes d'accrochage complémentaires pour former un système de connexion rapide du robinet sur un autre robinet ou sur un circuit de fluide.

L'invention concerne également une bouteille de fluide sous pression comprenant un robinet selon l'une quelconque des caractéristiques ci-dessus ou ci-après.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue en coupe, schématique et partielle, illustrant un exemple de structure de robinet selon l'invention dans une première configuration de fonctionnement,
- la figure 2 représente une vue en coupe, schématique et partielle, illustrant le robinet de la figure 1 dans une seconde configuration de fonctionnement,
- la figure 3 représente une vue en coupe, schématique et partielle, illustrant un autre exemple de structure de robinet selon l'invention monté sur un réservoir,
- les figures 4 et 5 représentent des vues en coupe agrandies, schématique et partielles, d'un détail d'un robinet illustrant un exemple de mécanisme d'actionnement d'un interrupteur et selon respectivement deux états distincts,
- la figure 6 représente une vue en coupe agrandie, schématique et partielle, d'un détail d'un robinet illustrant un autre exemple de réalisation d'un mécanisme d'actionnement d'un interrupteur.

Le robinet 1 représenté aux figures comprend un corps 2 abritant classiquement un circuit 3 de fluide ayant une extrémité 4 amont destinée à être mise en relation avec une réserve de fluide sous pression (une bouteille 14 ou un ensemble de bouteilles par exemple) et une extrémité 5 aval destinée à être mise en relation avec un appareil utilisateur du gaz fourni par la réserve de fluide sous pression.

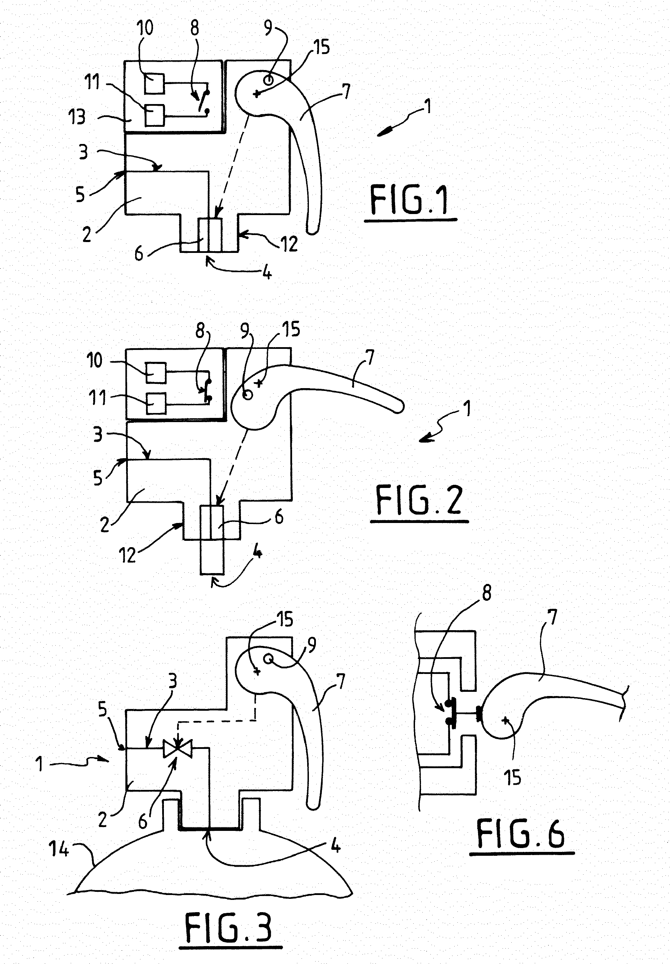

Comme illustré à la figure 3, le circuit 3 peut comprendre classiquement une vanne 6 de contrôle du débit dans le circuit 3. Cette vanne 6 peut être un clapet d'isolation pour l'ouverture ou la fermeture du circuit 3 et/ou un clapet permettant de régler un débit ou une pression ou tout autre type de clapet approprié.

La vanne 6 est commandée par un levier 7 monté pivotant sur le corps 2 du robinet 1 (au niveau par exemple d'au moins une articulation 15).

Le levier 7 est mobile entre une position de repos (cf. par exemple figure 3 ou figure 1) dans laquelle la vanne 6 est maintenu dans un premier état correspondant à une première valeur de débit dans le circuit 3 (par exemple un débit nul) et une seconde position active (cf. figure 2 qui concerne un mode de réalisation proche) dans laquelle le levier 7 déplace la vanne 6 dans un second état correspondant à une seconde valeur de débit dans le circuit 3 (par exemple circuit complètement ouvert pour un débit maximal).

Comme schématisé à la figure 3, le robinet 1 peut être raccordé (fixé par exemple par vissage via des organes 12 d'accrochage) à une bouteille de fluide sous pression.

L'organe 6 de contrôle de débit dans le circuit 3 représenté à la figure 3 comprend une vanne 6 mais tout autre organe 6 de contrôle de débit pourrait être envisagé.

Par exemple, en variante ou en combinaison, et comme illustré aux figures 1 et 2, le robinet 2 pourrait comprendre une pièce mobile telle qu'un pousse-clapet dont le mouvement est commandé par le levier 7. Ce pousse- clapet 6, par exemple mobile en translation, peut être prévu par exemple pour actionner (ouvrir notamment) un système de clapet(s) situé sur un autre robinet ou une bouteille sur lequel le robinet 1 vient se raccorder pour prélever ou transférer du fluide sous pression.

Par exemple, ce robinet 1 pourrait être raccordable (via les organes 12 d'accrochage) de façon amovible à un autre robinet distinct dit « robinet de base ». Ce robinet de base est par exemple solidaire d'au moins une bouteille de fluide sous pression. Dans ce cas, le pousse-clapet 6 dont le déplacement est commandé par le levier 7 peut commander l'ouverture ou la fermeture d'un clapet d'isolation du robinet de base sur lequel est raccordé de façon amovible ledit robinet 1.

De même, le levier 7 pivotant peut être remplacé par tout autre organe d'actionnement approprié (bouton, mobile en translation et/ou en rotation)...

Le robinet 1 comprend en outre au moins un organe 10, 11 fonctionnel électronique et un interrupteur 8 de commande du au moins un organe 10, 11 fonctionnel électronique.

L'interrupteur 8 est déplaçable dans au moins deux états distincts, par exemple « ouvert » et « fermé » correspondant par exemple à l'absence ou la présence d'une alimentation électrique vers l'organe 10, 11 fonctionnel électronique. De même, ces deux états de l'interrupteur peuvent correspondre à deux états distincts de fonctionnement de l'organe 10, 11 fonctionnel électronique ayant des consommations électriques distinctes (« état de veille » et « état actif » ou deux niveaux de puissance électrique différents).

Selon une particularité avantageuse, l'organe d'actionnement 7 est configuré pour déplacer l'interrupteur 8 entre deux états distincts lors de son déplacement dans au moins une position parmi : sa position de repos, sa position active, ou une position intermédiaire entre ces deux positions.

C'est-à-dire que lorsque l'organe d'actionnement 7 est déplacé d'une première position de départ (position de repos, position active, ou une position intermédiaire entre ces deux positions) vers une seconde position distincte (position active, position de repos, ou une position intermédiaire entre ces deux positions), l'interrupteur 8 est déplacé ou commuté d'un premier état vers un second. De préférence, le déplacement inverse (retour à la position de départ) commande la commutation inverse.

Le déplacement du levier 7 commande donc à la fois le circuit de fluide et le circuit électrique. Par exemple, un ou des organes de l'organe 10, 11 fonctionnel électronique sont éteints ou mis en marche ou activés ou modifiés selon que le levier 7 déclenche ou non un transfert de fluide dans le circuit 3.

Ceci permet d'adapter le fonctionnement et/ou la consommation électrique du ou des organes 10, 11 fonctionnel électroniques au fonctionnement fluidique du robinet. Ceci améliore l'ergonomie d'utilisation du robinet, son fonctionnement et sa consommation électrique.

Dans un cas simple, l'organe 10, 11 fonctionnel électronique (une antenne de communication sans fil ou autre) est éteint lorsque le circuit de fluide est fermé et allumé lorsque le circuit est ouvert. Bien entendu d'autres configurations plus évoluées sont possibles. Par exemple, la fréquence de mesure d'un capteur électronique ou la fréquence de transfert de données d'un organe de communication est modifiée (augmentée) lorsque le circuit est ouvert et inversement.

Le ou les organes 10, 11 fonctionnels électroniques peuvent comprendre au moins l'un parmi : un dispositif réception et/ou d'émission de données sans fil comprenant une antenne, un capteur de pression, un capteur de température, une logique électronique de stockage et de traitement de données comprenant un microprocesseur, un écran digital, une source lumineuse...

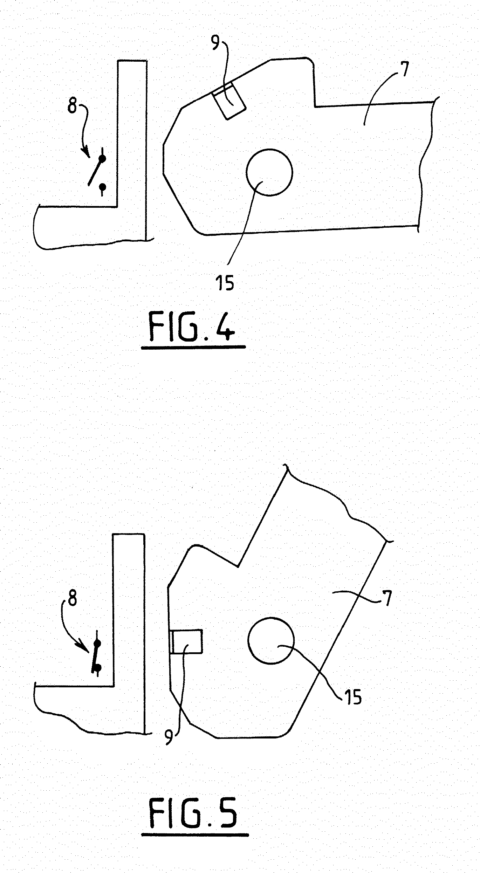

Dans l'exemple des figures 1 à 5, l'interrupteur 8 est un interrupteur magnétique et le levier 7 comprend un élément 9 magnétique (tel qu'un aimant permanent) générant un champ magnétique et qui vient déplacer l'interrupteur 8 sans contact via son champ magnétique. Par exemple l'interrupteur 8 est sollicité en position fermée en l'absence de champ magnétique de l'aimant (ou en-dessous d'un niveau d'intensité du champ magnétique) cf. figures 1 et 4 L'interrupteur 8 est en revanche commuté en position ouverte lorsque l'élément 9 magnétique est approché (cf. figure 2 et 5).

Bien entendu, en combinaison, le levier 7 pourrait déplacer l'interrupteur 8 par actionnement mécanique et/ou électrique et/ou pneumatique et/ou hydraulique (cf. la figure 6 par exemple).

Comme schématisé aux figures, le au moins un organe 10, 11 fonctionnel électronique peut être logé dans un boitier 13 monté de façon amovible sur le corps 2 du robinet 1.

## Revendications

1. Robinet pour fluide sous pression, avec ou sans détendeur de pression intégré, comprenant un corps (2) abritant un circuit (3) de fluide ayant une extrémité (4) amont destinée à être mise en relation avec une réserve de fluide sous pression et une extrémité (5) aval destinée à être mise en relation avec un appareil récepteur, le circuit (3) comprenant un organe (6) de contrôle du débit dans le circuit (3), l'organe (6) de contrôle du débit étant commandé par un organe (7) d'actionnement mobile par rapport au corps (2) du robinet (1), l'organe (7) d'actionnement étant monté mobile sur le corps (2) du robinet (1) entre une position de repos dans laquelle l'organe (6) de contrôle est disposé dans un premier état correspondant à une première valeur de débit dans le circuit (3) et une seconde position active dans laquelle l'organe d'actionnement (7) déplace l'organe (6) de contrôle dans un second état correspondant à une seconde valeur de débit dans le circuit (3), le robinet (1) comprenant au moins un organe (10, 11) fonctionnel électronique et un interrupteur (8) de commande du au moins un organe (10, 11) fonctionnel électronique, l'interrupteur (8) étant magnétique et déplaçable dans au moins deux états distincts, l'organe d'actionnement (7) étant configuré pour déplacer l'interrupteur (8) d'un premier état vers un second état lors de son déplacement dans au moins une position parmi : sa position de repos, sa position active, ou une position intermédiaire entre ces deux positions, **caractérisé en ce que** l'organe d'actionnement (7) comprend un levier monté pivotant sur le corps (2) du robinet (1) et **en ce que** l'interrupteur est distinct et distant de l'organe de contrôle et **en ce que** le levier comprend un élément (9) magnétique tel qu'un aimant permanent générant un champ magnétique qui vient déplacer l'interrupteur (8) sans contact via son champ magnétique selon la position du levier (7) sur le corps du robinet, ledit élément (9) magnétique étant logé dans une cavité du levier.

2. Robinet selon la revendication 1 **caractérisé en ce que** le levier (7) est monté pivotant sur le corps (2) du robinet (1) au niveau d'une extrémité comprenant au moins une articulation (15) et **en ce que** ladite extrémité du levier (7) comprend une came dont une portion assure le déplacement de l'interrupteur selon la position du levier sur le corps du robinet.

3. Robinet selon l'une quelconque des revendications 1 à 2, **caractérisé en ce que** l'organe d'actionnement (7) déplace ou commute l'interrupteur (8) également par actionnement mécanique et/ou électrique et/ou pneumatique et/ou hydraulique.

4. Robinet selon l'une quelconque des revendications 1 à 3, **caractérisé en ce que** l'organe (6) de contrôle comprend au moins l'un parmi ; un clapet d'isolation, une vanne de régulateur de débit ou de pression, un organe pousse-clapet mobile destiné à actionner un clapet d'un autre appareil lequel le robinet est destiné à être raccordé.

5. Robinet selon l'une quelconque des revendications 1 à 4, **caractérisé en ce que** le au moins un organe (10, 11) fonctionnel électronique comprend au moins l'un parmi : un dispositif réception et/ou d'émission de données sans fil comprenant une antenne, un capteur de pression et/ou de température, une logique électronique de stockage et de traitement de données comprenant un microprocesseur, un écran digital, une source lumineuse.

6. Robinet selon l'une quelconque des revendications 1 à 5, **caractérisé en ce que** l'interrupteur est déplaçable entre deux états distincts respectivement ouvert et fermé correspondant respectivement à une ouverture ou une fermeture d'un circuit électrique comprenant le au moins un organe (10, 11) fonctionnel électronique.

7. Robinet selon la revendication 6, **caractérisé en ce que** les deux états ouvert et fermé de l'interrupteur (8) commandent respectivement l'interruption de l'alimentation électrique et l'alimentation électrique du au moins un organe (10, 11) fonctionnel électronique.

8. Robinet selon l'une quelconque des revendications 1 à 7, **caractérisé en ce que** le au moins un organe (10, 11) fonctionnel électronique est disposé dans un boitier (13) monté de façon amovible sur le corps (2) du robinet (1).

9. Robinet selon l'une quelconque des revendications 1 à 8, **caractérisé en ce qu'**il comprend une extrémité (12) de montage comprenant des organes d'accrochage destinés à coopérer avec des organes d'accrochage complémentaires pour former un système de connexion rapide du robinet (1) sur un autre robinet ou sur un circuit de fluide.

10. Bouteille de fluide sous pression comprenant un robinet selon l'une quelconque des revendications 1 à 9.

## Patentansprüche

1. Schließhahn für Druckfluid, mit oder ohne integriertem Druckminderer, umfassend einen Körper (2), der einen Fluidkreislauf (3) beherbergt, der ein stromaufwärtiges Ende (4), das dazu bestimmt ist, mit einem Druckfluidvorrat verbunden zu werden, und ein stromabwärtiges Ende (5) aufweist, das dazu bestimmt ist, mit einer Aufnahmeeinrichtung verbunden zu werden, wobei der Kreislauf (3) ein Organ (6) zur Kontrolle des Durchsatzes in dem Kreislauf (3) umfasst, wobei das Organ (6) zur Kontrolle des Durchsatzes von einem Betätigungsorgan (7) gesteuert wird, das in Bezug auf den Körper (2) des Schließhahns (1) mobil ist, wobei das Betätigungsorgan (7) mobil auf dem Körper (2) des Schließhahns (1) zwischen einer Ruheposition, in der das Organ (6) zur Kontrolle in einem ersten Zustand angeordnet ist, der einem ersten Durchsatzwert in dem Kreislauf (3) entspricht, und einer zweiten aktiven Position montiert ist, in der das Betätigungsorgan (7) das Organ (6) zur Kontrolle in einen zweiten Zustand verschiebt, der einem zweiten Durchsatzwert in dem Kreislauf (3) entspricht, wobei der Schließhahn (1) mindestens ein elektronisches Funktionsorgan (10, 11) und einen Steuerschalter (8) des mindestens einen elektronischen Funktionsorgans (10, 11) umfasst, wobei der Schalter (8) magnetisch und in mindestens zwei verschiedene Zustände verschiebbar ist, wobei das Betätigungsorgan (7) konfiguriert ist, um den Schalter (8) eines ersten Zustands in einen zweiten Zustand zu verschieben während seiner Verschiebung in mindestens eine Position von: seiner Ruheposition, seiner aktiven Position, oder einer Zwischenposition zwischen diesen zwei Positionen, **dadurch gekennzeichnet, dass** das Betätigungsorgan (7) einen Hebel umfasst, der schwenkbar auf dem Körper (2) des Schließhahns (1) montiert ist und dadurch, dass der Schalter von dem Organ zur Kontrolle verschieden und entfernt ist, und dadurch, dass der Hebel ein magnetisches Element (9), wie ein Permanentmagnet, umfasst, das ein Magnetfeld erzeugt, das den Schalter (8) kontaktlos über sein Magnetfeld gemäß der Position des Hebels (7) auf dem Körper des Schließhahns verschiebt, wobei das magnetische Element (9) in einem Hohlraum des Hebels aufgenommen wird.

2. Schließhahn nach Anspruch 1, **dadurch gekennzeichnet, dass** der Hebel (7) schwenkbar auf dem Körper (2) des Schließhahns (1) an einem Ende montiert ist, das mindestens ein Gelenk (15) umfasst, und dadurch, dass das Ende des Hebels (7) einen Nocken umfasst, von dem ein Abschnitt die Verschiebung des Schalters gemäß der Position des Hebels auf dem Körper des Schließhahns gewährleistet.

3. Schließhahn nach einem der Ansprüche 1 bis 2, **dadurch gekennzeichnet, dass** das Betätigungsorgan (7) den Schalter (8) ebenfalls durch mechanische und/oder elektrische und/oder pneumatische und/oder hydraulische Betätigung verschiebt oder umschaltet.

4. Schließhahn nach einem der Ansprüche 1 bis 3, **dadurch gekennzeichnet, dass** das Organ (6) zur Kontrolle mindestens eines umfasst von; einem Absperrventil, einem Durchsatz- oder Druckregulatorventil, einem mobilen Ventilstellerorgan, das dazu bestimmt ist, ein Ventil einer anderen Einrichtung zu betätigen, wobei der Schließhahn dazu bestimmt ist, daran angeschlossen zu werden.

5. Schließhahn nach einem der Ansprüche 1 bis 4, **dadurch gekennzeichnet, dass** das mindestens eine elektronische Funktionsorgan (10, 11) mindestens eines umfasst von: einer drahtlosen Datenaufnahme- und/oder Datensendevorrichtung, umfassend eine Antenne, einem Druck- und/oder Temperatursensor, einer elektronischen Datenspeicher- und Datenverarbeitungslogik, umfassend einen Mikroprozessor, einem digitalen Bildschirm, einer Lichtquelle.

6. Schließhahn nach einem der Ansprüche 1 bis 5, **dadurch gekennzeichnet, dass** der Schalter zwischen zwei verschiedenen Zuständen verschiebbar ist, die jeweils offen oder geschlossen sind, die jeweils einer Öffnung oder einer Schließung eines Stromkreislaufs entsprechen, der das mindestens eine elektronische Funktionsorgan (10, 11) umfasst.

7. Schließhahn nach Anspruch 6, **dadurch gekennzeichnet, dass** die zwei offenen und geschlossenen Zustände des Schalters (8) jeweils die Unterbrechung der Stromversorgung und die Stromversorgung des mindestens einen elektronischen Funktionsorgans (10, 11) steuern.

8. Schließhahn nach einem der Ansprüche 1 bis 7, **dadurch gekennzeichnet, dass** das mindestens eine elektronische Funktionsorgan (10, 11) in einem Gehäuse (13) angeordnet ist, das lösbar auf dem Körper (2) des Schließhahns (1) montiert ist.

9. Schließhahn nach einem der Ansprüche 1 bis 8, **dadurch gekennzeichnet, dass** er ein Montageende (12) umfasst, das Einrastorgane umfasst, die dazu bestimmt sind, mit zusätzlichen Einrastorganen zusammenzuwirken, um ein Schnellverbindungssystem des Schließhahns (1) auf einem anderen Schließhahn oder auf einem Fluidkreislauf zu bilden.

10. Druckfluidflasche, umfassend einen Schließhahn nach einem der Ansprüche 1 bis 9.

## Claims

1. Tap for pressurised fluid, with or without a built-in pressure regulator, comprising a body (2) housing a circuit (3) of fluid that has an upstream end (4) intended to be put into relation with a reserve of pressurised fluid and a downstream end (5) intended to be put into relation with a receiving device, the circuit (3) comprising a member (6) for controlling the flow rate in the circuit (3), the member (6) for controlling the flow rate being controlled by an actuating member (7) that is mobile with respect to the body (2) of the tap (1), the actuating member (7) being movably mounted on the body (2) of the tap (1) between an idle position wherein the control member (6) is arranged in a first state corresponding to a first flow rate value in the circuit (3) and a second active position wherein the actuating member (7) moves the control member (6) in a second state corresponding to a second flow rate value in the circuit (3), the tap (1) comprising at least one electronic functional member (10, 11) and a switch (8) for controlling the at least one electronic functional member (10, 11), the switch (8) being magnetic and able to be moved in at least two separate states, the actuating member (7) being configured to move the switch (8) from a first state to a second state during the movement thereof in at least one position from among: the idle position thereof, the active position thereof, or an intermediate position between these two positions, **characterised in that** the actuating member (7) comprises a lever pivotably mounted on the body (2) of the tap (1) and **in that** the switch is separate and at a distance from the control member and **in that** this lever comprises a magnetic element (9) such as a permanent magnet generating a magnetic field that moves the switch (8) without contact via the magnetic field thereof according to the position of the lever (7) on the body of the tap, said magnetic element (9) being housed in a cavity of the lever.

2. Tap according to claim 1, **characterised in that** the lever (7) is pivotably mounted on the body (2) of the tap (1) on an end comprising at least one articulation (15) and **in that** said end of the lever (7) comprises a cam of which a portion ensures the movement of the switch according to the position of the lever on the body of the tap.

3. Tap according to any one of claims 1 to 2, **characterised in that** the actuating member (7) moves or switches the switch (8) also via mechanical and/or electrical and/or pneumatic and/or hydraulic actuation.

4. Tap according to any one of claims 1 to 3, **characterised in that** the control member (6) comprises at least one from among; an isolation valve, a flow rate or pressure regulator valve, a mobile clapper member intended to actuate a flap of another device of which the tap is intended to be connected.

5. Tap according to any one of claims 1 to 4, **characterised in that** the at least one electronic functional member (10, 11) comprises at least one from among: a wireless device for receiving and/or emitting data comprising an antenna, a pressure and/or temperature sensor, an electronic logic for data storage and processing comprising a microprocessor, a digital screen, a light source.

6. Tap according to any one of claims 1 to 5, **characterised in that** the switch can be moved between two separate states respectively open and closed corresponding respectively to an opening or a closing of an electrical circuit comprising the at least one electronic functional member (10, 11).

7. Tap according to claim 6, **characterised in that** the two open and closed states of the switch (8) respectively control the switching of the electrical power supply and the electrical power supply of the at least one electronic functional member (10, 11).

8. Tap according to any one of claims 1 to 7, **characterised in that** the at least one electronic functional member (10, 11) is arranged in a box (13) movably mounted on the body (2) of the tap (1).

9. Tap according to any one of claims 1 to 8, **characterised in that** it comprises a mounting end (12) comprising hanging members intended to cooperate with complementary hanging members for forming a quick connection system of the tap (1) on another tap or on a fluid circuit.

10. Cylinder of pressurised fluid comprising a tap according to any one of claims 1 to 9.
